# EUROPÄISCHE PATENTSCHRIFT

(11) **EP 2 244 899 B1**
(45) Veröffentlichungstag und Bekanntmachung des Hinweises auf die Patenterteilung: **27.05.2015**
(21) Anmeldenummer: 08859963.4
(22) Anmeldetag: 22.11.2008
(51) Int. Cl.: B60K 6/48, B60K 6/36, B60K 6/365, B60K 6/38, B60K 6/387, B60K 6/405, B60K 6/547

(54) **ANTRIEBSSTRANGMODUL FÜR EIN KRAFTFAHRZEUG**
DRIVE TRAIN MODULE FOR A MOTOR VEHICLE
MODULE DE CHAINE CINEMATIQUE POUR VEHICULE A MOTEUR

(30) Priorität: 13.12.2007 DE 102007060165
(43) Veröffentlichungstag der Anmeldung: 03.11.2010
(73) Patentinhaber: Volkswagen Aktiengesellschaft, 38440 Wolfsburg (DE)
(72) Erfinder: MÜLLER, Frank, 38165 Essenrode (DE); KRUSE, Georg, 38518 Gifhorn (DE); WARNECKE, Raimar, 38179 Schwülper (DE)
(86) Internationale Anmeldenummer: PCT/EP2008/009913
(87) Internationale Veröffentlichungsnummer: WO 2009/074219

(56) Entgegenhaltungen:
- EP-A1- 1 710 113
- DE-A1- 10 018 926
- FR-A1- 2 871 110

## Beschreibung

### Gebiet der Erfindung

Die Erfindung betrifft ein Antriebsstrangmodul für ein Kraftfahrzeug gemäß dem Oberbegriff des Anspruchs 1. Das Fahrzeug umfasst ein Anschlussstück einer ein Antriebsmoment von einem Verbrennungsmotor des Kraftfahrzeugs in ein fahrzeugfestes Modulgehäuse übertragenden Antriebswelle und eine als Innenläufer ausgebildete elektrische Maschine mit einem modulgehäusefesten Stator und einem ringförmigen Rotor, der über einen sich radial erstreckenden Rotorträger drehfest mit einer dem Anschlussstück axial benachbarten Rotorwelle verbunden ist.

### Stand der Technik

Ein derartiges Antriebsstrangmodul ist bekannt aus der EP-A-1710113.

Hybrid-Antriebsstränge für Kraftfahrzeuge sind seit langem bekannt. Die vorliegende Erfindung bezieht sich auf einen so genannten Parallel-Hybriden, bei dem ein Verbrennungsmotor und eine elektrische Maschine in momentenadditiver Weise auf den Eingang einer Momenten- und/oder Drehzahlwandlereinheit einwirken. Der allgemeine Begriff Momenten- und/oder Drehzahlwandlereinheit soll im Rahmen der vorliegenden Anmeldung alle Formen manueller, automatisierter oder automatischer Getriebe sowie Wandlerautomaten umfassen. Bei derartigen Hybriden hat sich eine Bauform durchgesetzt, bei der der Verbrennungsmotor mittels einer Trennkupplung an- bzw. abkoppelbar ist. Dies hat beispielsweise beim rein elektrischen Betrieb oder im Fall der Bremskraftrekuperation den Vorteil, dass das die Effizienz des Vorgangs mindernde Schleppmoment des Verbrennungsmotors ausgeschaltet werden kann. Typischerweise wird hierzu die Trennkupplung, die insbesondere als Trockenkupplung ausgeführt wird, vor einem Schwungrad des Motors, typischerweise einem Zwei-Massen-Schwungrad angeordnet, wobei der Verbrennungsmotor einerseits der Trennkupplung und das Schwungrad mit dem nachfolgenden Triebstrang andererseits der Trennkupplung angeordnet ist. Dies ist zum einen axial sehr bauraumaufwendig und hat zum anderen den Nachteil unerwünschter und zu Vibrationen führender Wechselwirkungen zwischen dem Motor und der Trennkupplung.

Aus der DE 10 2005 004 207 A1 ist ein Antriebsstrangmodul bekannt, bei dem der Rotor der elektrischen Maschine ringförmig ausgebildet ist. Zwei Kupplungen eines Doppelkupplungsgetriebes sind radial innerhalb des Rotorringes konzentrisch zueinander angeordnet. Der Außenlamellenträger der radial äußeren der beiden Kupplungen des Doppelkupplungsgetriebes wirkt zugleich als Rotorträger, der den Rotor mit einer Hauptwelle des Getriebes drehfest verbindet. Um ein wahlweises An- und Abkoppeln des Rotors und damit des Elektromotors zu ermöglichen, ist eine weitere Kupplung zwischen Rotor und Kupplungsträger vorgesehen. Diese muss als dritte konzentrische Kupplung radial außerhalb der beiden Kupplungen des Doppelkupplungsgetriebes angeordnet werden. Dies führt zu einer erheblichen radialen Bauraumvergrößerung, die nur dadurch in Grenzen gehalten werden kann, dass alle Kupplungen als nasse Lamellenkupplungen ausgebildet sind. Hierdurch ergibt sich jedoch, dass auch der Rotor des Elektromotors nass läuft. Das hat den Nachteil, dass sich unvermeidlicher metallischer Abrieb an den magnetischen Teilen des Rotors anlagert und diesen bis zur Funktionsunfähigkeit verschmutzen kann. Zudem offenbart die genannte Druckschrift keine Möglichkeit, den Verbrennungsmotor wahlweise vom Triebstrang an- bzw. abzukoppeln.

### Aufgabenstellung

Es ist die Aufgabe der vorliegenden Erfindung, ein Antriebsstrangmodul zur Verfügung zu stellen, das ein wahlweises An- und Abkoppeln eines Verbrennungsmotors gestattet, einen geringen Bauraum benötigt und einen trockenen Lauf des Rotors der elektrischen Maschine erlaubt.

### Darstellung der Erfindung

Diese Aufgabe wird mit dem Antriebsstrangmodul von Anspruch 1 gelöst.

Die Erfindung basiert auf der Idee, die Trennkupplung unmittelbar an der Rotorwelle angreifen zu lassen und deren - ggf. mittelbare - Verbindung zu der Antriebswelle dadurch schaltbar zu machen. Dies erlaubt es, die hier als Rotorkupplung bezeichnete Trennkupplung, mit der der Verbrennungsmotor abgekoppelt werden kann, in unmittelbarer Nachbarschaft zu dem Rotorträger anzuordnen und insbesondere radial innerhalb des ringförmig ausgebildeten Rotors. Dies bedeutet eine erhebliche Bauraumeinsparung. Zugleich ist es möglich, den innerhalb des ringförmigen Rotors gelegenen Bereich als ein abgedichtetes Gehäuse auszubilden, in dem die Rotorkupplung bevorzugt als nasse Lamellenkupplung laufen kann. Der Rotor der elektrischen Maschine hingegen kann in einem trockenen Bereich des Modulgehäuses laufen.

Wie erwähnt ist die Rotorkupplung bevorzugt als eine nasse Lamellenkupplung ausgebildet, deren erster Lamellenträger drehfest mit der Rotorwelle und deren zweiter Lamellenträger drehfest mit dem Anschlussstück verbunden ist. Die Verwendung einer nassen Lamellenkupplung ermöglicht einen kleineren Bauraum und eine bessere Ansteuerbarkeit der Kupplung im Vergleich zu den üblicherweise verwendeten Trockenkupplungen.

Bei der bevorzugten Ausführungsform ist das Anschlussstück als ein Zweischeiben-Schwungrad ausgebildet, das trocken in einem dem Rotorkupplungsgehäuse axial benachbarten und gegen das Rotorkupplungsgehäuse abgedichteten Bereich des Modulgehäuses angeordnet ist. Dies bedeutet, dass das Zweimassen-Schwungrad dauerhaft mit der Verbrennungsmaschine gekoppelt ist und beim Öffnen der Rotorkupplung zusammen mit dem Verbrennungsmotor vom nachfolgenden Triebstrang abgekoppelt wird. Hierdurch können die von dem Verbrennungsmotor erzeugten Vibrationen auch im abgekoppelten Zustand wirksam gedämpft werden und negative Wechselwirkungen des Verbrennungsmotors mit der Trennkupplung unterbunden werden. Dabei läuft das Zweimassen-Schwungrad in einem trockenen Bereich des Modulgehäuses, sodass ein handelsübliches Zweimassen-Schwungrad verwendet werden kann.

Günstigerweise ist axial benachbart zu dem Rotorkupplungsgehäuse und wenigstens durch den Rotorträger von diesem getrennt ein abgedichtetes Getriebeelementengehäuse vorgesehen, das Elemente einer Momenten- und/oder Drehzahlwandlereinheit enthält. Dabei kann es sich bei einer Ausführungsform der Erfindung um eine Doppelkupplungsanordnung eines Doppelkupplungsgetriebes handeln, dessen eigentlicher Getriebeteil weiter abtriebsseitig angeordnet ist. Bei einer alternativen Ausführungsform kann das Getriebeelementengehäuse jedoch auch die Elemente eines Wandlerautomaten enthalten. Die Abdichtung des Getriebeelementengehäuses gegenüber dem Gehäusebereich, in dem sich der Rotorträger mit dem Rotor der elektrischen Maschine dreht, ist insbesondere dann sinnvoll, wenn wie typischerweise vorgesehen, die in dem Getriebeelementengehäuse angeordneten Elemente nass laufend sind. Dies bedeutet, dass bei der bevorzugten Ausführungsform des erfindungsgemäßen Antriebsstrangmoduls vier abwechselnd nasse und trockene Gehäusebereiche abgedichtet nebeneinander liegen, wobei sich der die Rotorkupplung enthaltende Nassraum radial innerhalb des ringförmigen Rotors befindet. Die Ölversorgung des Getriebeelementengehäuses kann auf die dem Fachmann bekannte Weise an den üblichen Zu- und Ableitungspunkten erfolgen. Das Rotorkupplungsgehäuse kann beispielsweise über eine als Hohlwelle ausgebildete Hauptwelle des Getriebes und einen um den ringförmigen Rotor nach radial außen verlegten Ablaufkanal, der in einen Getriebeölsumpf führt, versorgt werden.

Zur Vereinfachung der Montage, der Endkontrolle und der größeren Flexibilität bei der Auswahl der elektrischen Maschinen ist bei einer Weiterbildung der Erfindung vorgesehen, dass die elektrische Maschine als eine Baueinheit ihres Rotors, ihres Rotorträgers, ihrer Rotorwelle, ihres Stators und eines den Stator drehfest umgebenden Statorgehäuses unter drehfester Fixierung des Statorgehäuses in eine im Wesentlichen zylindrische Aufnahme des Modulgehäuses einschiebbar ist, wobei die in Einschubrichtung rückwärtige Wand des Statorgehäuses von einem mit der Aufnahme fixierbaren, als separates Bauteil ausgebildeten Gehäusedeckel gebildet wird. Dabei verläuft der Rotorträger bevorzugt im Wesentlichen parallel zu der in Einschubrichtung vorderen Statorgehäusewand und nah benachbart zu dieser und der Gehäusedeckel weist eine seinen radial inneren Bereich bildende Einbuchtung auf, in der das Rotorkupplungsgehäuse angeordnet ist. Mit anderen Worten kann die elektrische Maschine als eine Kartusche in eine entsprechende Aufnahme des Modulgehäuses eingesetzt werden. Die Aufnahme, die einen trockenen Gehäusebereich bildet, wird mit einem Gehäusedeckel verschlossen, dessen zentrale Einbuchtung den von dem Rotorträger nicht beanspruchten Raum einnimmt und so einen zwar radial innerhalb des ringförmigen Rotors liegenden, zugleich aber außerhalb des E-Maschinengehäuses liegenden Raum bildet. In diesem Raum kann die nasse Rotorkupplung angeordnet werden. Der Fachmann wird verstehen, dass die Begriffswahl der Anordnung eines Gehäuses in diesem und anderen Zusammenhängen innerhalb der vorliegenden Anmeldung sowohl die Variante umfasst, dass benachbarte Gehäuse jeweils eigene Gehäusewände aufweisen, als auch die Variante, dass sich zwei benachbarte Gehäuse eine gemeinsame Gehäusewand teilen.

Günstigerweise weist die innere Stirnwand der Aufnahme in dem Modulgehäuse einen Zentriersitz auf, der auf den Außendurchmesser eines in der in Einschubrichtung vorderen Statorgehäusewand fixierten und über diese vorstehenden ersten Lagers der die vordere Statorgehäusewand durchsetzenden Rotorwelle abgestimmt ist. Das vordere Lager der Rotorwelle ist somit im Statorgehäuse fixiert. Gleichzeitig dient es jedoch auch als Zentrierbolzen beim Einschub des Statorgehäuses in die Aufnahme. Somit wird das Statorgehäuse an seinem Außenumfang gegenüber dem Modulgehäuse nur drehgesichert. Eine Zentrierung erfolgt an dieser Stelle nicht. Diese erfolgt vielmehr durch den Zentriersitz des ersten Rotorwellenlagers. Ein zweites Lager der Rotorwelle ist bevorzugt in dem Gehäusedeckel fixiert. Der Gehäusedeckel bildet somit nicht nur die rückwärtige Wand des Modulgehäuses, sondern auch die rückseitige Wand des Statorgehäuses.

Weitere Merkmale und Vorteile der Erfindung ergeben sich aus der nachfolgenden, speziellen Beschreibung und den Zeichnungen.

### Kurzbeschreibung der Zeichnungen

Es zeigen:
- Fig. 1: eine erste Ausführungsform der Erfindung mit Doppelkupplungsgetriebe,
- Fig. 2: eine zweite Ausführungsform der Erfindung mit Wandlerautomat,
- Fig. 3: eine Variante der Ausführungsform von Figur 2 mit zusätzlicher Lamellenkühlung.

### Bevorzugte Ausführungsformen

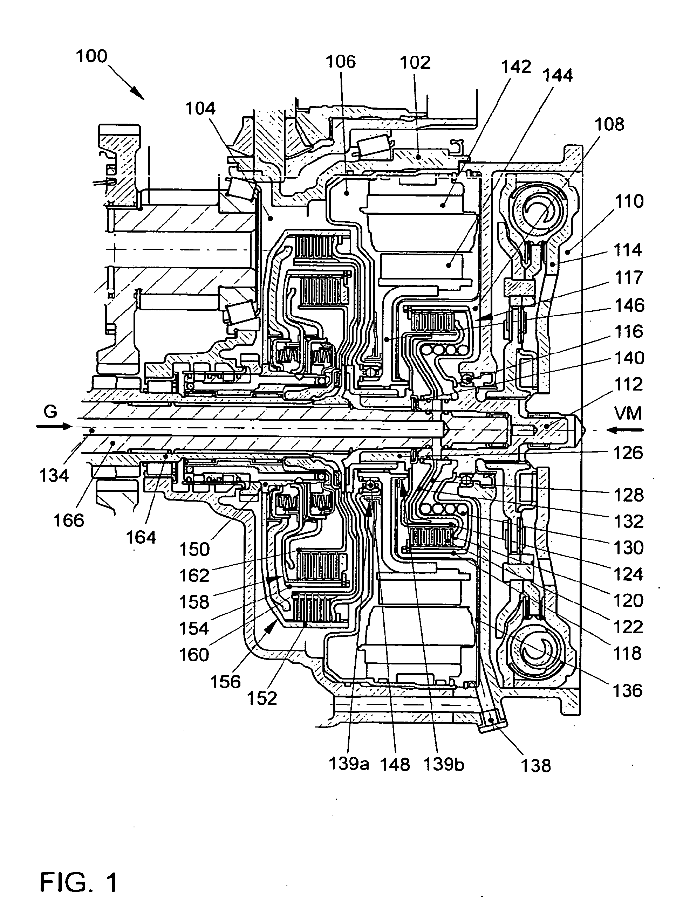

Figur 1 zeigt eine erste Ausführungsform eines erfindungsgemäßen Antriebsstrangmoduls 100 in Verbindung mit einem Doppelkupplungsgetriebe. Ein äußeres Modulgehäuse 102 ist fest mit der Tragkonstruktion eines Kraftfahrzeugs verbunden. Das Modul 100 weist vier benachbart zueinander liegende Gehäusebereiche auf, nämlich das Doppelkupplungsgehäuse 104, das E-Maschinengehäuse 106, das Rotorkupplungsgehäuse 108 und das Schwungradgehäuse 110. Das E-Maschinengehäuse 106 und das Schwungradgehäuse 110 bilden jeweils einen trockenen Raum, während das Doppelkupplungsgehäuse 104 und das Rotorkupplungsgehäuse 108 jeweils einen nassen Raum bilden. Im Einbauzustand des Moduls 100 wird ein Moment von einem nicht dargestellten Verbrennungsmotor VM in Figur 1 von rechts eingeleitet und nach links zu einem Getriebe G abgegeben. Als Einleitungspunkt in das Modul 100 dient ein Anschlussstück 112 einer im Übrigen nicht dargestellten Antriebswelle. Das Anschlussstück 112 ist in der gezeigten Ausführungsform ein Zusammenbauelement, das ein Zweimassen-Schwungrad 114 umfasst und zugleich als Nabe der im Rotorkupplungsgehäuse 108 angeordneten Rotorkupplung 117 dient. Das Anschlussstück 112 ist über ein gedichtetes Lager 116 gegen das Modulgehäuse drehbar gelagert, wobei das abgedichtete Lager 116 das Rotorkupplungsgehäuse 108 gegen das Schwungradgehäuse 110 abdichtet.

Die in dem Rotorkupplungsgehäuse 108 angeordnete Rotorkupplung 117 ist als eine nass laufende Lamellenkupplung ausgebildet, die im unbetätigten Zustand geschlossen ist (normally closed). Die Rotorkupplung umfasst einen äußeren Lamellenträger 118, der fest mit dem Anschlussstück 112 verbunden ist. Er trägt ein Außenlamellenpaket 120, welches verschachtelt mit einem Innenlamellenpaket 122 angeordnet ist. Das lnnenlamellenpaket 122 wird von einem Innenlamellenträger 124 getragen, der fest mit einer relativ zu dem Anschlussstück 112 drehbeweglich gelagerten und als Hohlwelle ausgebildeten Rotorwelle 126 drehfest verbunden ist. Ein auf dem Anschlussstück 112 axial verschieblicher Druckkolben 128, der mit dem Lamellenpaket 120-122 wechselwirkt, ist mittels einer Feder 130 gegen den Außenlamellenträger 118 vorgespannt, sodass die Rotorkupplung 117 im nicht betätigten Zustand geschlossen ist. D.h. im nicht betätigten Zustand besteht eine drehfeste Verbindung zwischen dem Anschlussstück 112 und der Rotorwelle 126. Zur Beaufschlagung des Druckkolbens 128 ist ein Druckkanal 132 vorgesehen, der mittels einer nicht dargestellten Ölpumpe über einen in einer hohlen Zentralwelle 166 des Getriebes geführten Ölkanal 134 gespeist wird. Ein Abflusskanal 136 ist nach radial außen geführt, wo er in einen Verbindungskanal 138 mündet, der zum nicht dargestellten Getriebeölsumpf führt. Der Abflusskanal wird von den hier einander eng benachbarten Wänden des Schwungradgehäuses 110 einerseits und des E-Maschinengehäuses 106 andererseits gebildet.

Abtriebsseitig, d.h. in Figur 1 links, sowie radial außen dem Rotorkupplungsgehäuse 108 benachbart, liegt das E-Maschinengehäuse 106 welches über zwei Dichtungen 139a, b gegen das Rotorgehäuse 108 abgedichtet ist. In dem E-Maschinengehäuse, welches drehfest mit dem Modulgehäuse 102 verbunden ist, befindet sich drehfest radial außen festgelegt der Stator 142 der elektrischen Maschine. Der Rotor 144 der elektrischen Maschine ist ringförmig ausgebildet und läuft radial innerhalb des Stators 142. Er ist auf einem Rotorträger 146 angeordnet, der drehfest mit der Rotorwelle 126 verbunden ist. Über ein Lager 148 ist der Rotorträger gegenüber der Wandung des E-Maschinengehäuses 106 und somit gegenüber dem Stator 142 drehbar gelagert. Gleichzeitig dichtet die Dichtung 139a das E-Maschinengehäuse 106 gegen das abtriebsseitig, d.h. in Figur 1 links benachbarte Doppelkupplungsgehäuse 104 ab. Die Rotorwelle 126 ist drehfest mit der Nabe 150 und somit mit den Außenlamellenträgern 152, 154 der Kupplungen 156, 158 der Doppelkupplung verbunden. Die Innenlamellenträger 160, 162 der beiden Kupplungen 156, 158 sind drehfest mit einer als Hohlwelle ausgebildeten Getriebeeingangswelle 164 bzw. einer Getriebeeingangswelle 166, die als Zentralwelle ausgebildet und koaxial innerhalb der Getriebeeingangswelle 164 verläuft, verbunden. Auf eine detailliertere Beschreibung des Doppelkupplungsgetriebes sei hier verzichtet, da Doppelkupplungsgetriebe als solche dem Fachmann bekannt sind und ihr konkreter Aufbau für die vorliegende Erfindung nicht von Belang ist.

Der Fachmann wird erkennen, dass durch Betätigung der Rotorkupplung 117 das Anschlussstück 112 und damit die Verbrennungsmaschine VM sowie das Zweimassen-Schwungrad 114 von dem Rotor 144 und dem mit diesem verbundenen, nachfolgenden Antriebsstrang abgekoppelt wird. Durch die verschachtelte Bauweise wird der Bauraum optimal ausgenutzt. Durch die Anordnung der einzelnen Elemente in gegeneinander abgedichteten Gehäusen kann jedes Element für sich optimiert werden. Insbesondere können alle Kupplungen als differenziert ansteuerbare und wenig Bauraum beanspruchende nasse Lamellenkupplungen ausgebildet werden, während die elektrische Maschine sowie das Zweimassen-Schwungrad in trockenen Gehäusebereichen laufen.

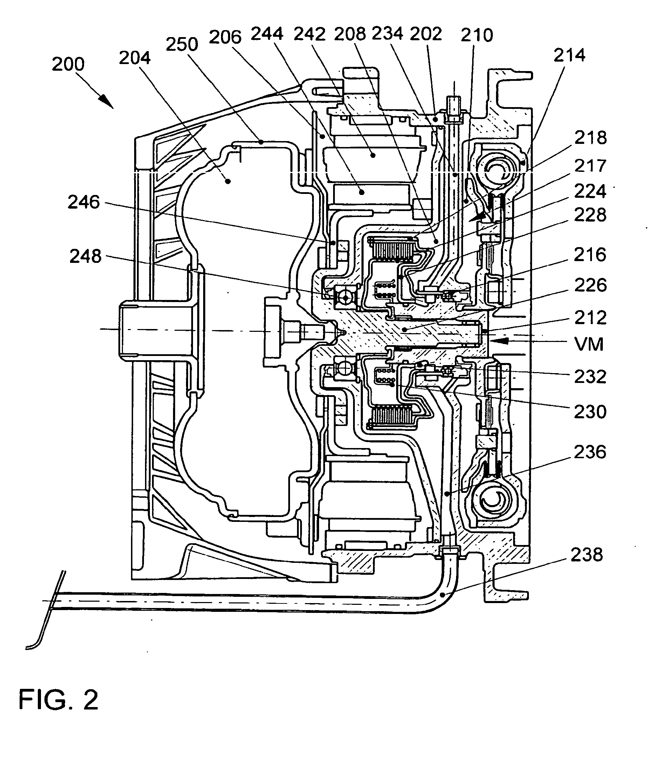

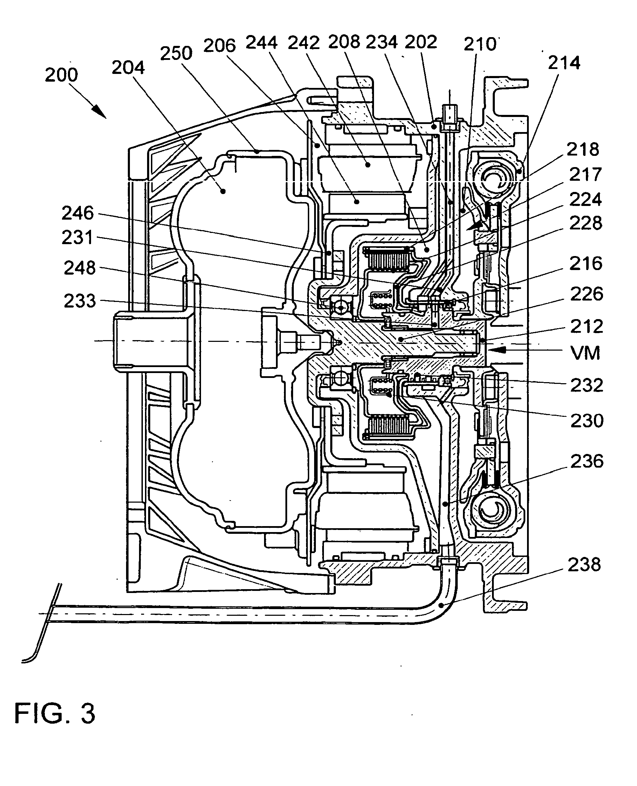

Figur 2 zeigt eine zweite Ausführungsform eines erfindungsgemäßen Antriebsstrangmoduls 200. Aus Gründen der Übersichtlichkeit sind nicht alle Einzelheiten des Moduls mit Bezugszeichen versehen, wie in Figur 1. Der Fachmann wird jedoch identische und analoge Bauteile ohne weiteres identifizieren können. Gleiches gilt für die weiter unten beschriebene Figur 3. Das Modul 200 weist ebenfalls vier gegeneinander abgedichtete Gehäusebereiche innerhalb des Modulgehäuses 202 auf. Es handelt sich dabei um ein Wandlergehäuse 204, ein E-Maschinengehäuse 206, ein Rotorkupplungsgehäuse 208 sowie ein Schwungradgehäuse 210. Über ein Anschlussstück 212 kann ein Moment von einem in Figur 2 nicht dargestellten Verbrennungsmotor über eine ebenfalls nicht dargestellte Antriebswelle in das Modul 200 eingeleitet werden. Das Anschlussstück 112 ist als Zusammenbauteil ausgeführt und umfasst insbesondere ein Zweimassen-Schwungrad 214. Es ist mittels eines abgedichteten Lagers 216 drehbar gegen das Rotorkupplungsgehäuse 208 gelagert. Das Lager 216 dichtet zugleich das nasse Rotorkupplungsgehäuse 217 gegen das Schwungradgehäuse 210. Die Rotorkupplung 217 koppelt das Anschlussstück 212 mit dem Rotor 244, der über seinen Rotorträger 246 mit einer zentralen Motorwelle 226 drehfest verbunden ist. Ein abgedichtetes Lager 248 lagert die Rotorwelle 226 drehbar gegen das modulgehäusefeste E-Maschinengehäuse 206 und dichtet dieses gegen das nasse Rotorkupplungsgehäuse 208. Der Rotorträger 246 ist mit der Eingangsglocke 250 eines nicht im Detail dargestellten Wandlerautomaten, dessen Elemente in dem Wandlergehäuse 204 angeordnet sind, verbunden. Im Gegensatz zu der Ausführungsform von Figur 1 ist die Rotorkupplung 217 bei der Ausführungsform von Figur 2 im nicht betätigten Zustand geöffnet (normally open). Um dies zu erreichen, wird der Druckkolben 228 der Rotorkupplung 217 von einer Feder 230 in die Lamellenträger 218, 224 entlastender Weise vorgespannt. Zu seiner Betätigung wird Öl über einen Ölkanal 234 von radial außen einem Druckkanal 232 zugeführt, sodass der entstehende Öldruck den Druckkolben 228 relativ zu dem Außenlamellenträger 218 verschiebt und die Kupplung 217 schließt. Zur Ableitung des Öls aus dem Rotorkupplungsgehäuse 208 ist ein Abflusskanal 236 vorgesehen, der nach radial außen geführt ist und in einen Verbindungskanal 238 zum Getriebesumpf übergeht. Unabhängig von der Ausführungsform von Figur 1 verschiedenen Form der Ausführung der Getriebeelemente sowie der Ansteuerung der Rotorkupplung 217 ist auch bei der in Figur 2 gezeigten Ausführungsform die der vorliegenden Erfindung zugrunde liegende Idee verwirklicht, die Rotorkupplung 217 in einem abgedichteten Gehäuse radial innerhalb eines ringförmig ausgebildeten Rotors 244 anzuordnen. Der Rotor 244 und sein zugehöriger Stator 242 sind dabei in einem trockenen Modulgehäusebereich angeordnet.

Figur 3 zeigt im Wesentlichen die gleiche Ausführungsform wie Figur 2 mit dem Unterschied, dass eine zusätzliche Kühlung der Lamellen der Rotorkupplung 217 vorgesehen ist. Diese zusätzliche Kühlung wird durch einen zusätzlichen Ölkanal 231 erreicht, der über den Verbindungskanal 233 den Zapfen der Zentralwelle 226 umspült und das Öl in dem Rotorkupplungsgehäuse unabhängig von der Betätigung der Rotorkupplung 217 in Fluss hält.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum an Variationsmöglichkeiten anhand gegeben. Insbesondere die konkrete Gestaltung der Getriebeelemente in dem Gehäuse 104 bzw. 204 ist vom Fachmann an die Gegebenheiten des Einzelfalls anzupassen.

### Bezugszeichenliste

- 100: Antriebsstrangmodul
- 102: Modulgehäuse
- 104: Doppelkupplungsgehäuse
- 106: E-Maschinengehäuse
- 108: Rotorkupplungsgehäuse
- 110: Schwungscheibengehäuse
- 112: Anschlussstück der Antriebswelle
- 114: Zweimassen-Schwungrad
- 116: abgedichtetes Lager
- 117: Rotorkupplung
- 118: Außenlamellenträger
- 120: Außenlamellenpaket
- 122: Innenlamellenpaket
- 124: Innenlamellenträger
- 126: Rotorwelle
- 128: Druckkolben
- 130: Feder
- 132: Druckkanal
- 134: Ölkanal
- 136: Abflusskanal
- 138: Verbindungskanal zum Getriebeölsumpf
- 139a: Dichtung
- 139b: Dichtung
- 140: Axiallager
- 142: Stator
- 144: Rotor
- 146: Rotorträger
- 148: Lager
- 150: Nabe der Doppelkupplung
- 152: Außenlamellenträger von 156
- 154: Außenlamellenträger von 158
- 156: erste Kupplung der Doppelkupplung
- 158: zweite Kupplung der Doppelkupplung
- 160: Innenlamellenträger von 156
- 162: Innenlamellenträger von 158
- 164: Getriebeeingangswelle
- 166: Getriebeeingangswelle
- 200: Antriebsstrangmodul
- 202: Modulgehäuse
- 204: Wandlergehäuse
- 206: E-Maschinengehäuse
- 208: Rotorkupplungsgehäuse
- 210: Schwungscheibengehäuse
- 212: Anschlussstück der Antriebswelle
- 214: Zweimassen-Schwungrad
- 216: abgedichtetes Lager
- 217: Rotorkupplung
- 218: Außenlamellenträger
- 224: Innenlamellenträger
- 226: Rotorwelle
- 228: Druckkolben
- 230: Feder
- 231: zusätzlicher Ölkanal
- 232: Druckkanal
- 233: zusätzlicher Verbindungskanal
- 234: Ölkanal
- 236: Abflusskanal
- 238: Verbindungskanal zum Getriebeölsumpf
- 242: Stator
- 244: Rotor
- 246: Rotorträger
- 248: abgedichtetes Lager
- 250: Wandlereingangsglocke

## Patentansprüche

1. Antriebsstrangmodul für ein Kraftfahrzeug, umfassend ein Anschlussstück (112; 212) einer ein Antriebsmoment von einem Verbrennungsmotor des Kraftfahrzeugs in ein fahrzeugfestes Modulgehäuse (102; 202) übertragenden Antriebswelle und eine als Innenläufer ausgebildete elektrische Maschine mit einem modulgehäusefesten Stator (142; 242) und einem ringförmigen Rotor (144; 244), der über einen sich radial erstreckenden Rotorträger (146; 246) drehfest mit einer dem Anschlussstück (112; 212) axial benachbarten Rotorwelle (126; 226) verbunden ist, wobei eine Rotorkupplung (117; 217), die eine schaltbare Verbindung zwischen der Rotorwelle (126; 226) und dem Anschlussstück (112; 212) darstellt, in einem gegen den trocken laufenden Rotorträger (146; 246) abgedichteten Rotorkupplungsgehäuse (108; 208) enthalten ist, das wenigstens bereichsweise radial innerhalb des Rotors (144; 244) angeordnet ist, **dadurch gekennzeichnet, dass** das Rotorkupplungsgehäuse (108; 208) modulgehäusefest angeordnet ist.

2. Antriebsstrangmodul nach Anspruch 1 **dadurch gekennzeichnet, dass** die Rotorkupplung (117; 217) als eine nasse Lamellenkupplung ausgebildet ist, deren erster Lamellenträger (124; 244) drehfest mit der Rotorwelle (126; 226) und deren zweiter Lamellenträger (118; 218) drehfest mit dem Anschlussstück (112; 212) verbunden ist.

3. Antriebsstrangmodul nach einem der vorangehenden Ansprüche, **dadurch gekennzeichnet, dass** das Anschlussstück (112; 212) als ein Zusammenbauteil umfassend ein Zweimassen-Schwungrad a(114; 214) ausgebildet ist, das trocken in einem dem Rotorkupplungsgehäuse (108; 208) axial benachbarten und gegen das Rotorkupplungsgehäuse (108; 208) abgedichteten Bereich des Modulgehäuses (102; 202) angeordnet ist.

4. Antriebsstrangmodul nach einem der vorangehenden Ansprüche, **dadurch gekennzeichnet, dass** axial benachbart zu dem Rotorkupplungsgehäuse (108; 208) und wenigstens durch den Rotorträger (146; 246) von diesem getrennt ein abgedichtetes Getriebeelementengehäuse (104; 204) vorgesehen ist, das Elemente einer Momenten- und/oder Drehzahlwandlereinheit enthält.

5. Antriebsstrangmodul nach Anspruch 4, **dadurch gekennzeichnet, dass** das Getriebeelementengehäuse (104) zwei als nasse Lamellenkupplungen ausgebildete Kupplungen (156; 158) eines Doppelkupplungsgetriebes enthält.

6. Antriebsstrangmodul nach Anspruch 4, **dadurch gekennzeichnet, dass** das Getriebeelementengehäuse (204) die Elemente eines Wandlerautomaten enthält.

7. Antriebsstrangmodul nach einem der vorangehenden Ansprüche, **dadurch gekennzeichnet, dass** die elektrische Maschine als eine Baueinheit ihres Rotors, ihres Rotorträgers, ihrer Rotorwelle, ihres Stators und eines den Stator drehfest umgebenden Statorgehäuses unter drehfester Fixierung des Statorgehäuses in eine im Wesentlichen zylindrische Aufnahme des Modulgehäuses einschiebbar ist, wobei die in Einschubrichtung rückwärtige Wand des Statorgehäuses von einem mit der Aufnahme fixierbaren, als separates Bauteil ausgebildeten Gehäusedeckel gebildet wird.

8. Antriebsstrangmodul nach Anspruch 7, **dadurch gekennzeichnet, dass** die innere Stirnwand der Aufnahme einen Zentriersitz aufweist, der auf den Außendurchmesser eines in der in Einschubrichtung vorderen Statorgehäusewand fixierten und über diese vorstehenden ersten Lagers der die vordere Statorgehäusewand durchsetzenden Rotorwelle abgestimmt ist.

9. Antriebsstrangmodul einem der Ansprüche 7 bis 8, **dadurch gekennzeichnet, dass** ein zweites Lager der Rotorwelle in dem Gehäusedeckel fixiert ist.

10. Antriebsstrangmodul einem der Ansprüche 7 bis 9, **dadurch gekennzeichnet, dass** der Rotorträger im Wesentliche parallel zu der in Einschubrichtung vorderen Statorgehäusewand und nah benachbart zu dieser verläuft und der Gehäusedeckel eine seinen radial inneren Bereich bildende Einbuchtung aufweist, in der das Rotorkupplungsgehäuse angeordnet ist.

## Claims

1. Drive train module for a motor vehicle, comprising a connector piece (112; 212) of a drive shaft which transmits a drive torque from an internal combustion engine of the motor vehicle into a module housing (102; 202) which is fixed on the vehicle, and an electric machine which is configured as an internal-rotor motor having a stator (142; 242) which is fixed to the module housing and an annular rotor (144; 244) which is connected fixedly via a radially extending rotor carrier (146; 246) to a rotor shaft (126; 226) so as to rotate with it, which rotor shaft (126; 226) is axially adjacent with respect to the connector piece (112; 212), a rotor coupling (117; 217) which produces a switchable connection between the rotor shaft (126; 226) and the connector piece (112; 212) being contained in a rotor coupling housing (108; 208) which is sealed against the dry-running rotor carrier (146; 246) and is arranged at least in regions radially within the rotor (144; 244), **characterized in that** the rotor coupling housing (108; 208) is arranged fixedly on the module housing.

2. Drive train module according to Claim 1, **characterized in that** the rotor coupling (117; 217) is configured as a wet multiple disc clutch, the first multiple disc carrier (124; 244) of which is connected fixedly to the rotor shaft (126; 226) so as to rotate with it and the second multiple disc carrier (118; 218) of which is connected fixedly to the connector piece (112; 212) so as to rotate with it.

3. Drive train module according to one of the preceding claims, **characterized in that** the connector piece (112; 212) is configured as an assembled component comprising a two-mass flywheel (114; 214) which is arranged in a dry-running manner in a region of the module housing (102; 202), which region is axially adjacent with respect to the rotor coupling housing (108; 208) and is sealed against the rotor coupling housing (108; 208).

4. Drive train module according to one of the preceding claims, **characterized in that** a sealed transmission element housing (104; 204) is provided axially adjacently with respect to the rotor coupling housing (108; 208) and such that it is separated from the latter at least by the rotor carrier (146; 246), which transmission element housing (104; 204) contains elements of a torque and/or speed converter unit.

5. Drive train module according to Claim 4, **characterized in that** the transmission element housing (104) contains two clutches (156; 158) of a double clutch transmission which are configured as wet multiple disc clutches.

6. Drive train module according to Claim 4, **characterized in that** the transmission element housing (204) contains the elements of an automatic converter.

7. Drive train module according to one of the preceding claims, **characterized in that** the electric machine, as a structural unit of its rotor, its rotor carrier, its rotor shaft, its stator and a stator housing which surrounds the stator fixedly so as to rotate with it, can be pushed with rotationally blocked fixing of the stator housing into a substantially cylindrical receptacle of the module housing, the rear wall (in the pushing-in direction) of the stator housing being formed by a housing cover which can be fixed with the receptacle and is configured as a separate component.

8. Drive train module according to Claim 7, **characterized in that** the inner front wall of the receptacle has a centring seat which is adapted to the external diameter of a first bearing of the rotor shaft which penetrates the front stator housing wall, which first bearing is fixed in the front stator housing wall (in the pushing-in direction) and projects beyond it.

9. Drive train module according to either of Claims 7 and 8, **characterized in that** a second bearing of the rotor shaft is fixed in the housing cover.

10. Drive train module according to one of Claims 7 to 9, **characterized in that** the rotor carrier runs substantially parallel to and closely adjacently with respect to the front stator housing wall (in the pushing-in direction), and the housing cover has an indentation which forms its radially inner region and in which the rotor coupling housing is arranged.

## Revendications

1. Module de chaîne cinématique pour un véhicule à moteur, comportant une pièce de raccordement (112 ; 212) d'un arbre d'entraînement transmettant un couple d'entraînement d'un moteur à combustion interne du véhicule à moteur à un boîtier de module (102 ; 202) solidaire du véhicule et une machine électrique réalisée sous forme d'induit intérieur et comprenant un stator (142 ; 242) solidaire du boîtier de module et un rotor annulaire (144 ; 244) qui est relié de manière solidaire en rotation à un arbre de rotor (126 ; 226) axialement adjacent à la pièce de raccordement (112 ; 212) par le biais d'un support de rotor (146 ; 246) s'étendant radialement, un accouplement de rotor (117 ; 217), qui constitue une liaison commutable entre l'arbre de rotor (126 ; 226) et la pièce de raccordement (112 ; 212), étant contenu dans un boîtier d'accouplement de rotor (108 ; 208) rendu étanche par rapport au support de rotor (146 ; 246) fonctionnant à sec, lequel boîtier d'accouplement de rotor est disposé au moins par endroits radialement à l'intérieur du rotor (144 ; 244), **caractérisé en ce que** le boîtier d'accouplement de rotor (108 ; 208) est disposé de manière solidaire du boîtier de module.

2. Module de chaîne cinématique selon la revendication 1, **caractérisé en ce que** l'accouplement de rotor (117 ; 217) est réalisé sous la forme d'un embrayage à disques humide dont le premier porte-disques (124 ; 244) est relié de manière solidaire en rotation à l'arbre de rotor (126 ; 226) et dont le deuxième porte-disques (118 ; 218) est relié de manière solidaire en rotation à la pièce de raccordement (112 ; 212).

3. Module de chaîne cinématique selon l'une quelconque des revendications précédentes, **caractérisé en ce que** la pièce de raccordement (112 ; 212) est réalisée sous la forme d'un composant assemblé comportant un volant d'inertie à deux masses (114 ; 214) qui est disposé à sec dans une région du boîtier de module (102 ; 202) axialement adjacente au boîtier d'accouplement de rotor (108 ; 208) et rendue étanche par rapport au boîtier d'accouplement de rotor (108 ; 208).

4. Module de chaîne cinématique selon l'une quelconque des revendications précédentes, **caractérisé en ce qu'**un boîtier d'éléments de transmission étanche (104 ; 204) est prévu de manière axialement adjacente par rapport au boîtier d'accouplement de rotor (108 ; 208) et de manière séparée de celui-ci au moins par le support de rotor (146 ; 246), lequel boîtier d'éléments de transmission comporte des éléments d'une unité de convertisseur de couple et/ou de vitesse de rotation.

5. Module de chaîne cinématique selon la revendication 4, **caractérisé en ce que** le boîtier d'éléments de transmission (104) comporte deux embrayages (156 ; 158), réalisés sous forme d'embrayages à disques humides, d'une transmission à embrayage double.

6. Module de chaîne cinématique selon la revendication 4, **caractérisé en ce que** le boîtier d'éléments de transmission (204) comporte les éléments d'une transmission automatique à convertisseur.

7. Module de chaîne cinématique selon l'une quelconque des revendications précédentes, **caractérisé en ce que** la machine électrique peut être insérée, en tant qu'unité structurale de son rotor, de son support de rotor, de son arbre de rotor, de son stator et d'un boîtier de stator entourant de manière solidaire en rotation le stator, en fixant de manière solidaire en rotation le boîtier de stator dans un logement essentiellement cylindrique du boîtier de module, la paroi, arrière dans le sens d'insertion, du boîtier de stator étant formée par un couvercle de boîtier pouvant être fixé avec le logement et réalisé en tant que composant séparé.

8. Module de chaîne cinématique selon la revendication 7, **caractérisé en ce que** la paroi frontale intérieure du logement comprend un siège de centrage qui est adapté au diamètre extérieur d'un premier palier, fixé dans la paroi de boîtier de stator avant dans le sens d'insertion et faisant saillie au-delà de celle-ci, de l'arbre de rotor traversant la paroi de boîtier de stator avant.

9. Module de chaîne cinématique selon l'une quelconque des revendications 7 et 8, **caractérisé en ce qu'**un deuxième palier de l'arbre de rotor est fixé dans le couvercle de boîtier.

10. Module de chaîne cinématique selon l'une quelconque des revendications 7 à 9, **caractérisé en ce que** le support de rotor s'étend essentiellement parallèlement à la paroi de boîtier de stator avant dans le sens d'insertion et à proximité immédiate de celle-ci et le couvercle de boîtier comprend un renfoncement formant sa région radialement intérieure, dans lequel le boîtier d'accouplement de rotor est disposé.
